# EUROPEAN PATENT SPECIFICATION

(11) **EP 3 374 469 B1**
(45) Date of publication and mention of the grant of the patent: **28.04.2021**
(21) Application number: 16791327.6
(22) Date of filing: 13.10.2016
(51) Int. Cl.: C10B 7/10, C10B 19/00, C10B 53/07

(54) **A METHOD AND A REACTOR FOR THERMAL PYROLYSIS OF RUBBER MATERIALS**
VERFAHREN UND REAKTOR ZUR THERMISCHEN PYROLYSE VON KAUTSCHUKMATERIALIEN
PROCÉDÉ ET RÉACTEUR DE PYROLYSE THERMIQUE DE MATÉRIAUX EN CAOUTCHOUC

(30) Priority: 16.10.2015 EP 15461567
(43) Date of publication of application: 19.09.2018
(73) Proprietor: Syntoil S.A., 53-329 Wroclaw (PL)
(72) Inventor: OBRYCKI, Tomasz Zbigniew, 53-329 Wroclaw (PL); SZTABA, Bogdan, 53-329 Wroclaw (PL); JASZEK, Piotr Wieslaw, 53-329 Wroclaw (PL); ZMUDA, Wieslaw Andrzej, 53-329 Wroclaw (PL)
(74) Representative: Kancelaria Eupatent.pl Sp. z.o.o
(86) International application number: PCT/EP2016/074632
(87) International publication number: WO 2017/064211

(56) References cited:
- EP-A1- 2 233 547
- WO-A1-2010/128055
- WO-A1-2012/127085
- WO-A1-2015/125166
- US-A- 3 574 890

## Description

### TECHNICAL FIELD

The present inventions relates to a method and a reactor for pyrolytically decomposing waste rubber materials to continuously produce pyrolysis products of a lower molecular weight.

### BACKGROUND

Pyrolysis is one of the most attracting methods for recycling of waste polymeric materials, as it does not require a homogenous polymeric feedstock. Mixed, composite polymeric materials, such as worn tires may be recycled in the pyrolysis process as well.

The pyrolysis process involves thermal degradation of polymeric materials by heating of the material in the absence of oxygen, at near atmospheric pressure. Pyrolysis of rubber is typically conducted at the temperature between 500 - 800°C and results in formation of carbonized char and volatile fraction that can be further separated into condensable hydrocarbon oil and non-condensable high calorific value gas. The proportion of each fraction and their precise composition depend on the chemical composition of the pyrolysed material and on the conditions of the process. Pyrolysis of rubber materials gives as the products: solid char: 30 - 40%wt, liquid residue constitutes: 40 - 60%wt and gases: 5 - 20%wt. The solid residue comprises carbon black and, in case of pyrolysis of tires, it may additionally comprise mineral matter (initially present in the tires). The obtained solid residue is a valuable additive that is usually used as a reinforcement agent in the rubber industry or, after suitable treatment - as activated carbon. The liquid product consists of a mixture of organic components that is usually separated to be used as fuel, petroleum refinery feedstock or a source of chemicals. The gaseous product of the rubber pyrolysis mainly comprises: H₂, H₂S, CO, CO₂ and hydrocarbons: CH₄, C₂H₄, C₃H₆ which are used as fuel.

Thermal conditions of pyrolysis of the rubber material such as heat transfer, heat distribution and heating rate are important parameters that affect the reaction time, product yield, product quality and requirement of energy to conduct the pyrolysis process. Conducting the pyrolysis process in a temperature that is higher than required and improper distribution of heat within the processed feedstock may lead to deterioration of the products quality and increase the costs of the process.

For the above reasons, different heating systems of reactors for rubber pyrolysis and pyrolysis methods have been developed, aiming to improve the heating transfer and heat distribution within the processed feedstock.

A US patent application US2014/0284198 describes an installation for pyrolysis waste rubber materials which comprises a pyrolysis reactor that is fitted with a core-less heating screw. The screw serves as both transferring means for transfer the material through a reactor tube and heating means for heating of the transferred material. The conveyor screw is provided inside the reaction tube that is made of a refractory material; the screw has both ends connected, via electrical connections, to an electrical power unit and heats the processed material by the Joule effect. The heating system of the reactor, via the core-less screw conveyor provides good control of the pyrolysis temperature through the reactor chamber.

A US patent application US2010329938 describes a system for pyrolysis of waste plastic, which consists of a screw conveyor for pre-homogenizing the waste plastic material with water and a tubular flow reactor having a tubular reaction chamber which is provided with a circumferentially positioned heater configured to inductively heat the selected polymeric material flowstream admixed with water, thereby facilitating pyrolysis process.

A US patent US3574890 describes a combined heating and mixing device for conduction of a process of high temperature polyolefins degradation. The device consists of a cylindrical housing having a wall forming a reaction chamber and a screw conveyor embedded through the housing. The cylindrical housing is provided with an induction heating system, provided on the wall of the housing for heating of the polyolefin material transported by a screw conveyor through the reaction chamber. The heating system is divided into sections where each housing section is provided with an induction heating system having a separate current supply on the outside, which provides a different heating temperature in each section of the reactor.

A PCT application WO2010/128055, published also as US2012043194, describes a system for pyrolysis of biomass and rubber to produce pyrolytic oils. The system comprises a screw conveyor for pre-conditioning of the material, by heating and drying, to raise the material temperature to about 100°C and to reduce the material humidity to about 10%. The system further comprises a pyrolysis chamber which has an inlet connected in line with an outlet of the pre-conditioning screw conveyor. The pyrolysis chamber is provided with a transfer screw, heated with Joule's effect, up to a temperature of 300 - 850°C. The electrical heating system, making use of the Joule's effect, provides efficient regulation of the heating rate of the processed material, either biomass or rubber, within the pyrolysis chamber - heating by Joule effect being regulated as a function of the processed material. The pyrolysis system further comprises a gas condenser, for condensation of the hot oils constituting pyrolysis products. The preconditioning treatment carried out in the screw conveyor provides a proper kinetics of the subsequent pyrolysis process, and this leads to the oil products of a better calorific value. However, the system of WO2010/128055 does not comprise further heating systems, and it does not suggest implementation of further heating systems into the pyrolysis chamber.

A PCT application WO2015/125166 describes a system for pyrolysis of thermoplastic materials: PE (polyethylene), PP (polypropylene), ABS (acrylonitrile-butadiene-styrene), PET (polyethylene terephthalate), PS (polystyrene), PU (polyurethane) and biomass. It is not suitable for pyrolysis of rubber, which constitutes elastomeric, i.e. partially cross-linked, material and requires different pyrolysis conditions. The system, described in WO2015/125166, comprises pyrolysis chamber provided with an Archimedes screw, that is fixedly mounded (welded) within the reaction chamber - during the pyrolysis process the chamber rotates itself. The pyrolysis chamber is further provided with a bisectional induction heating system which makes use of eddy currents of frequency in the range of 1,5 - 2,5kHz. The pyrolysis process is carried out within a relatively high temperature range: from 680 to 750°C. The main product of pyrolysis process is a syngas, and not oils. Moreover, the document WO2015/125166 does not suggest implementation, in the reaction chamber, further heating systems. The raw materials subject to the heating, by eddy currents of relatively low frequency (1,5 - 2,5kHz), are plastics or biomass, and not rubbers (having different chemical structure and therefore different physical and chemical properties).

It is known that plastic and rubber materials are poor thermal conductors. Nonetheless, thermoplastic materials melt, as a result of heating. Therefore, during the pyrolysis process, right at the initial pyrolysis phase, a thermoplastic material can be molten at higher temperatures and the thermal energy supplied into the material can be evenly distributed within the molten mass by simple mixing process.

Unlike thermoplastics, rubber material does not melt during heating process, due to its partially cross-linked chemical structure. Thus, during pyrolysis, the heat cannot be evenly distributed within the rubber mass and this leads to a wide large temperature gradients inside the pyrolysis reactor, which results in an undesirable diverse set of products. The aforementioned leads to the conclusion that to reduce the number of components produced, a system for pyrolysis of the rubber materials should have improved heat and mass transfer properties, as compared to the one that is used for pyrolysis of the plastic (thermoplastic) materials.

Therefore, the heating systems of pyrolysis reactors undergo development aiming to improve the control of temperature distribution in the processed material during pyrolysis.

There is a need for further development of the heating system of the screw reactor for thermal pyrolysis of the rubber materials that will provide better control of temperature distribution within the processed material during pyrolysis, thereby shortening the reaction time, improving product yield, product quality and energy requirement in the pyrolysis process.

### SUMMARY

There is disclosed a reactor for continuous pyrolysis of a rubber material and a method for continuous pyrolysis of a rubber material according to the appended claims.

### BRIEF DESCRIPTION OF THE DRAWING

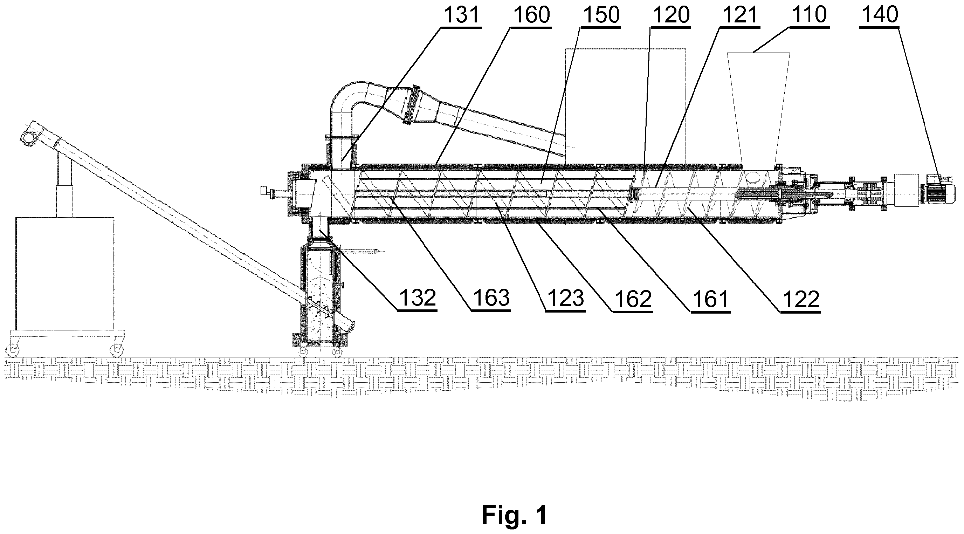

The invention is presented by means of exemplary embodiments in a drawing, in which Fig. 1 shows a schematic view of a reactor for thermal pyrolysis of the rubber materials.

### DETAILED DESCRIPTION

The reactor according to the present invention comprises a dual heating system that provides improved heat transfer as well as good heat distribution, thereby leading to an improved pyrolysis process.

The rubber materials which may be processed by the reactor according to the invention may be of different types: waste rubber such as natural or synthetic rubber comprising polymers, such as for example polyisoprene, polychloroprene, polybutadiene, polyisobutylene, or copolymers such as: poly(styrene-butadienestyrene). The rubber materials to be pyrolysed may further comprise different additives, plastificators or fillers. Exemplary rubber materials that may be pyrolysed are worn tires. In general, the term "rubber material" as used herein is meant to indicate natural rubber (1,4-polyisoprene) and synthetic rubbers such as: styrenebutadiene rubbers (SBR), butyl rubbers (consisting of polyisobutylene with addition of diolefin e.g. isoprene) or neoprene (2-chlorobutadiene-1,3). The term "rubber material" as used herein is meant to indicate a polymeric material that constitutes the elastomeric, partially cross-linked (e.g. vulcanized) polymer materials that may be stretched at room temperature to at least twice their original length and, after having been stretched and the stress removed, returns its force to approximately its original length in a short time. The rubber materials, due to their partially cross-linked structure, show improved thermal stability, compared to the thermoplastic materials (plastics) or biomass. The rubber cannot be molten but, at higher temperatures, it undergoes thermal degradation, wherein the temperature of degradation and the degradation rate depend, inter alia, on the crosslinking degree of the rubber material.

Fig. 1 shows a schematic of the reactor for pyrolysis according to the present invention provided with the dual heating system. The reactor has a form of an extruder having an elongated housing defining a cylindrical volume of a reaction chamber 150. The reaction chamber 150 comprises an upstream inlet 110, preferably connected to a feed hopper to facilitate introduction of rubber shreds into the inlet section of the reaction chamber 110. The reactor further comprises downstream outlets for leading out the pyrolysis products: a first outlet 131 for gaseous products and a second outlet 132 for both: the liquid and solid pyrolysis products.

The reactor further comprises an elongated rotatable screw 120 positioned lengthwise within the cylindrical reaction chamber 150. The screw 120 serves as conveying and mixing means to mix and to transport the rubber material form the inlet 110 to the outlets 131, 132 through the reaction chamber 150, during the pyrolysis process. The screw 120 is provided with a shaft 121 of a length equal to the length of the screw 120, or the screw 120 may comprise a shaft 121 that is shorter than the length of the screw 120 providing the screw 120 having a shaft section 122 and a shaftlless section 123 within the reaction chamber 150 - as shown in the drawing. Preferably, the screw 120 has the shaft section 122 provided within the inlet section 110 of the reactor chamber 150 and the shaftless 123 section provided within the outlet section of the reaction chamber 150. The shaft 121 of the screw 120 serves as heating means for resistively heating of the processed rubber material during pyrolysis process and it has two ends electrically connected to a power unit (not shown in Fig. 1) so that the shaft 121 of the screw 120 can heat the processed material by the Joule's effect. The heating shaft 121 of the screw 120 provides preheating of the rubber material that enters the reaction chamber 150, at the early stage of the pyrolysis process, thereby enhancing proper heat distribution within the mixed and transported material. When the screw 120 has the shaft 121 of a length equal the length of the screw 120, the processed material is heated at all stages of pyrolysis process.

The reactor 100 is further provided with an inductive heating system 160 for generating eddy currents for heating of the processed rubber material at all stages of pyrolysis process. The inductive heating system 160 is divided into sections 161, 162, 163, wherein the number and length of the sections depends on the type and fragmentation degree of the rubber material to be processed. The inductive heating system 160 is circumferentially positioned at the wall of the cylindrical reaction chamber 150 and provides inductively heating of the processed material along the reaction chamber 150. Each section 161, 162, 163 of the inductive heating system 160 may comprise a conventional alternating current power supply electrically connected to an induction coil, where the induction coil is positioned circumferentially about the central axis of the cylindrical reaction chamber 150 and the central axis of the heating shaft 121 of the screw 120. In this configuration, the induction coil, when energized, passes an alternating electrical current that simultaneously generates a transverse alternating magnetic field - a transverse alternating magnetic field that induces eddy currents and heats the processed material. It was unexpectably noticed that simultaneously heating of the rubber feedstock by resistive heating system of the reactor (the heating shaft 121) and the inductive heating system 160 generating eddy current of stimulation frequency in the range from 10 to 25 kHz, preferably from 15 to 18 kHz, provides improvement of pyrolysis time, product yield, product quality and the energy requirement leading to reduction of the overall energy expenditure that is necessary for carrying out the pyrolysis of the rubber materials.

The reactor may comprise three independent heating section 161, 162, 163 of the inductive heating system, or it may comprise more or less than three heating sections. For instance, the reactor may comprise from one to twenty heating sections 161, 162, 163 of the inductive heating system. Each section 161, 162, 163 may comprise independent temperature measurement system as well as independent control system that enables maintenance of desired temperature independently in each section 161, 162, 163. Moreover, each section 161, 162, 163 may be provided with the feedback control system that enables to continuously change the frequency of generated eddy current together with the change of the resonant frequency of the reaction chamber 150 during heating process, thereby providing improvement of heat distribution through the processed rubber material with minimum energy loss.

The process for pyrolysis by using of the reactor provided with dual heating system, i.e. the resistive heating system using the heating shaft 121 of the screw 120 and the inductive heating system 160 that generates eddy current of stimulation frequency in the range of 10 to 25 kHz, preferably over the range from 15 to 18 kHz, involves the following steps: introducing the shredded rubber material into the reactor and thermally treating the rubber material that is simultaneously the conveyed and mixed by the screw 120 in the reaction chamber 150. Preferably, the pyrolysis process is carried out at the temperature range from 500 to 550°C, but the reactor may heat the processed feedstock to the temperature within the range from 320 to 1350°C. The thermal treatment of the feedstock involves simultaneously heating of the material introduced into the reactor chamber 150 by means of the inductive heating 160 system and the resistive heating system 121, in the a continuous process. The pyrolysis products, i.e the gas and the mixture of solid and liquid substances, are lead out via the respective outlets 131, 132 and they may be further separated, purified and used as fuels.

### Example

200 kg of rubber granulate of granulation of 0-5mm was continuously introduced into the screw reactor and pyrolysed in the continuous process. The feedstock in the reactor was heated simultaneously by the induction heating system and the resistive heating system to the temperature of 500°C, at near atmospheric pressure, and conveyed by the screw with the rotation speed of the screw of 1rpm. The temperature of the processed material was measured at each heating section independently. After completion of the pyrolysis the following products were obtained: mixture of pyrolysis oils: 112kg (which constituted 56% of the total products mass), char: 79 kg (which constituted 39,5% of the total products mass) and pyrolysis gas: 9kg (which constituted 4,5% of the total products mass). The obtained pyrolysis products were weighted and stored in the separate containers.

## Claims

1. A reactor for continuous pyrolysis of a rubber material at a near atmospheric pressure, comprising:
- a reaction chamber (150) having an inlet (110) for the rubber material and outlets (131, 132) for pyrolysis products;
- a screw conveyor (120) installed within the reaction chamber (150), the screw conveyor (120) having a shaft (121) that is located at the inlet (110) for the rubber material and has its ends connected to an electric power supply for resistive preheating of the rubber material that enters the reaction chamber (150) at the early stage of the pyrolysis process; and
- an induction heating system (160) arranged circumferentially around the reaction chamber (150) configured to generate eddy current having a stimulation frequency in the range from 10 to 25 kHz for inductive heating of the rubber material within the reaction chamber (150) at all stages of the pyrolysis process, such that at least in a part of the reaction chamber (150) the rubber feedstock is simultaneously heated by the heating shaft (121) and the induction heating system (160).

2. The reactor according to claim 1, wherein the shaft (121) of the screw conveyor (120) has a length equal the length of the screw conveyor.

3. The reactor according to claim 1, wherein the shaft (121) of the screw conveyor (120) is shorter than screw conveyor (120) and the screw conveyor comprises at least one shaftless section (123).

4. The reactor according to claim 1, wherein the inductive heating system (160) comprises independently controlled sections (161, 162, 163), each having independent temperature measuring means.

5. A method for continuous pyrolysis of a rubber material at a near atmospheric pressure in a reactor, comprising the steps of:
- introducing the rubber material into an inlet section of the reactor;
- while mixing and conveying the rubber material through the reactor towards an outlet of the reactor, heating the rubber material simultaneously at least in a part of the reactor by means of:
- a resistive heating system comprising a screw conveyor (120) having a heating shaft (121) located at the inlet (110) for the rubber material and heated by the Joule's effect for heating material that enters the reaction chamber (150) at the early stage of the pyrolysis process; and
- an induction heating system (160) arranged circumferentially around the reaction chamber (150) of the reactor and configured to generate eddy current having a stimulation frequency in the range from 10 to 25 kHz for inductive heating of the rubber material within the reaction chamber (150) at all stages of the pyrolysis process.

## Patentansprüche

1. Reaktor für die kontinuierliche Pyrolyse eines Kautschukmaterials bei nahezu Atmosphärendruck, umfassend:
- eine Reaktionskammer (150) mit einem Einlass (110) für das Kautschukmaterial und mit Auslässen (131, 132) für Pyrolyseprodukte;
- einen Schneckenförderer (120), der in der Reaktionskammer (150) installiert ist, wobei der Schneckenförderer (120) eine Welle (121) aufweist, die sich an dem Einlass (110) für das Kautschukmaterial befindet, und wobei deren Enden mit einer elektrischen Stromversorgung verbunden sind zur Widerstandserhitzung des Kautschukmaterials, das in die Reaktionskammer (150) eintritt, in einer frühen Phase des Pyrolyseprozesses; und
- ein Induktionserhitzungssystem (160), das umfänglich um die Reaktionskammer (150) angeordnet ist, wobei es so gestaltet ist, dass es einen Wirbelstrom mit einer Stimulationsfrequenz im Bereich von 10 bis 25 kHz zur Induktionserhitzung des Kautschukmaterials in der Reaktionskammer (150) in allen Phasen des Pyrolyeseprozesses erzeugt, so dass zumindest in einem Teil der Reaktionskammer (150) das Kautschukrohmaterial gleichzeitig durch die Heizwelle (121) und das Induktionserhitzungssystem (160) erhitzt wird.

2. Reaktor nach Anspruch 1, wobei die Welle (121) des Schneckenförderers (120) eine Länge aufweist, die der Länge des Schneckenförderers entspricht.

3. Reaktor nach Anspruch 1, wobei die Welle (121) des Schneckenförderers (120) kürzer ist als der Schneckenförderer (120), und wobei der Schneckenförderer mindestens einen Abschnitt (123) ohne Welle umfasst.

4. Reaktor nach Anspruch 1, wobei das Induktionserhitzungssystem (160) unabhängig geregelte Abschnitte (161, 162, 163) umfasst, die jeweils eigene Temperaturmessmittel aufweisen.

5. Verfahren für die kontinuierliche Pyrolyse eines Kautschukmaterials bei nahezu Atmosphärendruck in einem Reaktor, die folgenden Schritte umfassend:
- Einführen des Kautschukmaterials in einen Einlassabschnitt des Reaktors;
- während dem Mischen und Fördern des Kautschukmaterials durch den Reaktor in Richtung eines Auslasses des Reaktors, gleichzeitiges Erhitzen des Kautschukmaterials in einem Teil des Reaktors durch:
- ein Widerstandserhitzungssystem, das einen Schneckenförderer (120) mit einer Heizwelle (121) umfasst, die sich an dem Einlass (110) für das Kautschukmaterial befindet, und erhitzt durch den Joule-Effekt, um Material zu erhitzen, das in der frühen Phase des Pyrolyseprozesses in die Reaktionskammer (150) eintritt; und
- ein Induktionserhitzungssystem (160), das umfänglich um die Reaktionskammer (150) des Reaktors angeordnet ist und das so gestaltet ist, dass es einen Wirbelstrom mit einer Stimulationsfrequenz im Bereich von 10 bis 25 kHz zur Induktionserhitzung des Kautschukmaterials in der Reaktionskammer (150) in allen Phasen des Pyrolyeseprozesses erzeugt.

## Revendications

1. Réacteur pour la pyrolyse continue d'un matériau de caoutchouc à une pression proche de la pression atmosphérique, comprenant :
- une chambre de réaction (150) ayant une entrée (110) pour le matériau de caoutchouc et des sorties (131, 132) pour des produits de pyrolyse ;
- un transporteur à vis (120) installé à l'intérieur de la chambre de réaction (150), le transporteur à vis (120) ayant une gaine (121) qui est située au niveau de l'entrée (110) pour le matériau de caoutchouc et a ses extrémités connectées à une alimentation électrique pour le préchauffage résistif du matériau de caoutchouc qui entre dans la chambre de réaction (150) au stade précoce du processus de pyrolyse ; et
- un système de chauffage par induction (160) agencé circonférentiellement autour de la chambre de réaction (150) configuré pou générer un courant de Foucault ayant une fréquence de stimulation dans la plage allant de 10 à 25 kHz pour le chauffage inductif du matériau de caoutchouc à l'intérieur de la chambre de réaction (150) à tous les stades du processus de pyrolyse, de telle sorte qu'au moins dans une partie de la chambre de réaction (150), la matière première caoutchouc soit simultanément chauffée par la gaine de chauffage (121) et le système de chauffage par induction (160).

2. Réacteur selon la revendication 1, la gaine (121) du transporteur à vis (120) ayant une longueur égale à la longueur du transporteur à vis.

3. Réacteur selon la revendication 1, la gaine (121) du transporteur à vis (120) étant plus courte que le transporteur à vis (120) et le transporteur à vis comprenant au moins une section sans gaine (123).

4. Réacteur selon la revendication 1, le système de chauffage inductif (160) comprenant des sections contrôlées indépendamment (161, 162, 163), ayant chacune des moyens de mesure de la température indépendants.

5. Procédé pour la pyrolyse continue d'un matériau de caoutchouc à une pression proche de la pression atmosphérique dans un réacteur, comprenant les étapes consistant à :
- introduire le matériau de caoutchouc dans une section d'entrée du réacteur ;
- tout en mélangeant et en transportant le matériau de caoutchouc au travers du réacteur vers une sortie du réacteur, chauffer le matériau de caoutchouc simultanément au moins dans une partie du réacteur au moyen :
- d'un système de chauffage résistif comprenant un transporteur à vis (120) ayant une gaine de chauffage (121) située au niveau de l'entrée (110) pour le matériau de caoutchouc et chauffée par l'effet de Joule pour le chauffage du matériau qui entre dans la chambre de réaction (150) au stade précoce du processus de pyrolyse ; et
- d'un système de chauffage par induction (160) agencé circonférentiellement autour de la chambre de réaction (150) du réacteur et configuré pour générer un courant de Foucault ayant une fréquence de stimulation dans la plage allant de 10 à 25 kHz pour le chauffage inductif du matériau de caoutchouc à l'intérieur de la chambre de réaction (150) à tous les stades du processus de pyrolyse.
